# EUROPÄISCHE PATENTANMELDUNG

(11) **EP 2 282 495 A1**
(43) Veröffentlichungstag der Anmeldung: **09.02.2011**
(21) Anmeldenummer: 10171076.2
(22) Anmeldetag: 28.07.2010
(51) Int. Cl.: H04M 1/725, H04W 8/18

(54) **Verfahren zum Ausführen einer in einem Benutzeridentifikationsmodul eines mobilen Endgerätes hinterlegten Applikation**

(30) Priorität: 04.08.2009 DE 102009036092
(71) Anmelder: Vodafone Holding GmbH, 40213 Düsseldorf (DE)
(72) Erfinder: Jacobs, Holger, 42349 Wuppertal (DE); Müller, Frank, 40237 Düsseldorf (DE)
(74) Vertreter: Müller & Schubert

(57) **Zusammenfassung**

Die vorliegende Erfindung betrifft ein Verfahren zum Ausführen einer in einem Benutzeridentifikationsmodul eines mobilen Endgerätes hinterlegten Applikation, beispielsweise eine Applikation welche es erlaubt ein mobilen Endgerätes mit zwei Telefonnummern zu nutzen.
Im Stand der Technik sind Verfahren bekannt bei denen bei Anwahl einer dedizierten Rufnummer, der Anruf zu dem Netzanbieter unterbunden und stattdessen zurück zum mobilen Endgerät ümgeleitet wird. Der umgeleitete Anruf löst auf dem mobilen Endgerät eine gespeicherte **Applikation** aus, beispielsweise das Anzeigen eines SIM-Toolkit-Menüs. Dieses Verfahren hat sich jedoch dahingehend als **nachteilig** herausgestellt, dass durch das Blocken des Rufaufbaus zu dem Netzanbieter in vielen Fällen Informationsmeldungen am mobilen Endgerät hervorrufen werden, die für den Teilnehmer eher verwirrend sind und in den Kontext des SIM-Toolkit-Menüaufrufes nicht passen, wie z.B. "Anruf nicht erlaubt" oder "Vorgang fehlgeschlagen". Im vorgeschlagenen Verfahren werden diese Informationsmeldungen dadurch vermieden, dass der Rufaufbau nicht geblockt wird, sondern erst bei Beendigung des Anrufs (5) die Applikation mittels eines sogenannten "Call-Disconnect-Event" (7) getriggert wird. Dieser Event triggert die Applikation (8) bzw. die SIM-Applikation, welche nun weitere Aktionen durchführen kann, wie zum Beispiel das SIM-Toolkit Menü aufzurufen (9).

## Beschreibung

Die vorliegende Erfindung betrifft ein Verfahren zum Ausführen einer in einem Benutzeridentifikationsmodul eines mobilen Endgerätes hinterlegten Applikation.

Das Ausführen von Applikation auf einem mobilen Endgerät gewinnt immer mehr an Bedeutung. So ist es bekannt, dass Teilnehmer eines Telekommunikationsnetzwerkes beispielsweise ein Call-Center ihres Netzwerkanbieters anrufen, um von diesem Daten, insbesondere Menüoptionen, zu erhalten. Ein Teilnehmer ruft beispielsweise von seinem mobilen Endgerät eine Support-Nummer seines Netzanbieters, z.B. die Nummern "611" oder "133". Nach dem Wählen der Support-Nummer antwortet ein automatisches System und versorgt den Teilnehmer mit einem Menü voller Optionen. Nachteilig hierbei ist, dass der Netzanbieters dem Teilnehmer nach dessen Anruf die Daten zur Verfügung stellen muss, was einen hohen Datenverkehr erfordert.

Moderne Sim-Karten ermöglichen das Speichern von Applikationen in einem Speicher der SIM-Karte. Die Applikationen können über ein sogenanntes SIM-Toolkit auf den SIM-Karten implementiert werden. D.h., das SIM-Toolkit ist ein GSM Standard und definiert neue Funktionen zwischen der SIM-Karte und dem mobilen Endgerät. Beispielsweise können Applikationen per SMS in den SIM-Kartenspeicher eines mobilen Endgerätes, welches das SIM-Toolkit unterstützt, geladen werden. Ein Netzanbieters kann neue Daten und Applikationen im laufenden Betrieb in den SIM-Kartenspeicher laden und die mobilen Endgeräte, insbesondere die Mobiltelefone, aktuell programmieren, wodurch neue Serviceangebote zur Verfügung gestellt werden können.

Die technischen Standards für das SIM-Toolkit sind für das GSM-Netzwerk in dem ETSI-Standard TS 101 267 (3GPP 11.14) sowie für allgemeine Standards und bezogen auf UMTS in den ETSI-Standards TS 102 223 bzw. TS 131 111 (3GPP 31.111) spezifiziert.

Moderne SIM-Karten ermöglichen beispielsweise das Betreiben eines mobilen Endgerätes mit zwei Telefonnummern. So kann das mobile Endgerät beispielsweise geschäftlich und privat genutzt werden. Hierzu ist es erforderlich das SIM-Toolkit-Menü aufzurufen, um dort einzustellen wie das mobile Endgerät betrieben werden soll.

Aus der WO 2005/081852 A2 ist ein Verfahren bekannt, bei dem eine in einem mobilen Endgerät gespeicherte Applikation aufgerufen, insbesondere ein Menü angezeigt, werden kann. Bei diesem Verfahren wird ein Rufaufbau an eine dedizierte Kurzwahlnummer mit Hilfe einer SIM-Applikation unterbunden und stattdessen dem Teilnehmer ein Menü auf dem mobilen Endgerät angezeigt. D.h., bei diesem Verfahren wird der Rufaufbau zu einem Netzanbieter, beispielsweise einem Call-Center, geblockt, um eine lokal gespeicherte Applikation auf dem mobilen Endgerät ausführen. Nach dem Detektieren des Rufaufbaus durch das mobile Endgerät wird festgestellt, ob die gewählte Rufnummer einer bestimmten Rufnummer entspricht. Wenn die Rufnummer der dedizierten Rufnummer entspricht, wird der Anruf zu dem Netzanbieter unterbunden und stattdessen zurück zum mobilen Endgerät umgeleitet. Der umgeleitete Anruf löst auf dem mobilen Endgerät eine gespeicherte Applikation aus, beispielsweise das Anzeigen eines SIM-Toolkit-Menüs.

Dieses Verfahren hat sich jedoch dahingehend als nachteilig herausgestellt, dass durch das Blocken des Rufaufbaus zu dem Netzanbieter in vielen Fällen Informationsmeldungen am mobilen Endgerät hervorrufen werden, die für den Teilnehmer eher verwirrend sind und in den Kontext des SIM-Toolkit-Menüaufrufes nicht passen. Das Blocken des Rufaufbaus mittels des sogenannten SIM-Toolkit-Kommandos "CALL CONTROL EVENT" führt zum Teil zu verwirrenden Meldungen des mobilen Endgerätes, wie z.B. "Anruf nicht erlaubt" oder "Vorgang fehlgeschlagen".

Der Erfindung liegt daher die Aufgabe zugrunde, ein Verfahren zu schaffen, welches auf eine einfache Art und Weise ermöglicht, eine in einem Benutzeridentifikationsmodul eines mobilen Endgerätes hinterlegte Applikation auszuführen, ohne dass verwirrende Meldungen auf dem mobilen Endgerät angezeigt werden.

Erfindungsgemäß wird diese Aufgabe durch ein Verfahren zum Ausführen einer in einem Benutzeridentifikationsmodul eines mobilen Endgerätes hinterlegten Applikation mit den Merkmalen gemäß dem unabhängigen Patentanspruch 1 gelöst. Weitere Merkmale und Details der Erfindung ergeben sich aus den Unteransprüchen, der Beschreibung sowie der Zeichnung.

Gemäß dem ersten Aspekt der Erfindung wird die Aufgabe durch ein Verfahren zum Ausführen einer in einem Benutzeridentifikationsmodul eines mobilen Endgerätes hinterlegten Applikation gelöst, wobei das Verfahren durch folgende Verfahrensschritte gekennzeichnet ist:
a) Wählen einer bestimmten, der hinterlegten Applikation zugeordneten Rufnummer mittels einer Eingabeeinheit des mobilen Endgerätes,
b) Aufbau eines Rufes zu einer zentralen Verwaltungseinheit in einem Telekommunikationsnetzwerk durch das mobile Endgerät,
c) Feststellung - beispielsweise durch Überprüfung, dass ein Ruf aufgebaut und beendet worden ist-, dass aufgebauter Ruf durch die zentrale Verwaltungseinheit entgegengenommen und der entgegengenommene Ruf - beispielsweise durch die Verwaltungseinheit oder das Endgerät - beendet worden ist,
d) Erzeugen einer Mitteilung durch das mobile Endgerät nach Feststellung der Beendigung des entgegengenommen Rufes oder Empfangen einer Mitteilung an dem mobilen Endgerät über die Feststellung der Beendigung des entgegengenommen Rufes,
e) Auslösen der in dem Benutzeridentifikationsmodul hinterlegten Applikation aufgrund der erzeugten oder empfangenen Mitteilung.

Ein Vorteil dieses Verfahren ist, dass durch das Entgegennehmen des Rufes des mobilen Endgerätes durch die zentrale Verwaltungseinheit des Telekommunikationsnetzwerkes auf dem mobilen Endgerät, welches den Ruf iniziert hat, keine verwirrenden Meldungen mehr angezeigt werden. Die verwirrenden Meldungen, die beim Blocken des Rufes aufgrund der entsprechenden ETSI-Standards nicht unterdrückt werden können, treten nicht mehr auf, weil der aufgebaute Ruf durch die zentrale Verwaltungseinheit entgegengenommen wird. D.h., der initiale Anruf wird nicht geblockt, sondern zu der zentralen Verwaltungseinheit des Telekommunikationsnetzwerkes aufgebaut und dort auch entgegengenommen. Entgegengenommen bedeutet, dass tatsächlich ein Ruf zwischen dem mobilen Endgerät und der zentralen Verwaltungseinheit zustande kommt. So können beispielsweise Sprachinformationen, die auf den bestimmten Dienst der in dem Benutzeridentifikationsmodul des mobilen Endgerätes hinterlegten Applikation hinweisen, zwischen der zentralen Verwaltungseinheit und dem mobilen Endgerät ausgetauscht werden.

Stellt das mobile Endgerät fest, dass der von der zentralen Verwaltungseinheit entgegengenommene Ruf wieder beendet worden ist, erzeugt das mobile Endgerät eine Mitteilung. Aufgrund der erzeugten Mitteilung wird die in dem Benutzeridentifikationsmodul hinterlegte Applikation ausgeführt, beispielsweise eine SIM-Toolkit-Applikation oder ein SIM-Toolkit-Menü angezeigt. Alternativ dazu kann vorgesehen sein, dass das mobile Endgerät eine Mitteilung über die Feststellung der Beendigung des durch die zentrale Verwaltungseinheit entgegengenommen Rufes empfängt. Aufgrund der empfangen Mitteilung wird dann die in dem Benutzeridentifikationsmodul hinterlegte Applikation ausgeführt.

Bei der Feststellung handelt es sich insbesondere um eine Überprüfung, dass der Ruf von dem mobilen Endgerät zu der zentralen Verwaltungseinheit aufgebaut, durch die zentrale Verwaltungseinheit entgegengenommen und nach dem Zustandekommen der Verbindung auch wieder beendet worden ist.

Die Mitteilung ist verzugsweise ein sogenannter "Call-Disconnect-Event". Die erzeugte oder empfangene Mitteilung, insbesondere der "Call-Disconnect-Event", wird an die in dem Benutzeridentifikationsmodul hinterlegte Applikation gesendet. Die Mitteilung bzw. der "Call-Disconnect-Event" triggert die hinterlegte Applikation, die weitere Aktionen durchführen kann. So kann die Mitteilung beispielsweise eine SIM-Toolkit-Applikation oder ein SIM-Toolkit-Menü aufrufen. Ferner können durch die Mitteilung weitere in dem Benutzeridentifikationsmodul hinterlegte Applikationen und insbesondere Servicedienste für den Teilnehmer, d.h. den Nutzer des mobilen Endgerätes, aufgerufen bzw. ausgeführt werden.

Dem Nutzer des mobilen Endgerätes werden bei diesen Verfahren keine verwirrenden Informationsmeldungen auf dem oder durch das mobile(n) Endgerät angezeigt, sondern dem Nutzer wird aufgrund der gewählten bestimmten Rufnummer direkt der Dienst oder die Information der der Rufnummer zugeordneten Applikation auf dem mobilen Endgerät angezeigt. Dabei kann es sich bei der Anzeige um eine visuelle und/oder akustische Anzeige handeln.

Durch das Wählen der bestimmten, der hinterlegten Applikation zugeordneten Rufnummer wird ein Ruf zu der zentralen Verwaltungseinheit in dem Telekommunikationsnetzwerk aufgebaut. Dabei kann vorgesehen sein, dass eine ganz spezielle Verwaltungseinheit angerufen wird. Diese zentrale Verwaltungseinheit kann nur für die eine bestimmte Rufnummer zuständig sein, d.h. nur durch das Wählen der einen bestimmten Rufnummer wird die zentrale Verwaltungseinheit erreicht. In diesem Fall ist keine Überprüfung erforderlich, ob die gewählte Rufnummer der hinterlegten Applikation auch wirklich zugeordnet ist, da die spezielle Verwaltungseinheit dies durch die Entgegennahme des Rufes weiss.

Gemäß einer besonders zweckmäßigen Weiterbildung der Erfindung kann jedoch bei dem Verfahren vorgesehen sein, dass das mobile Endgerät und/oder die zentrale Verwaltungseinheit überprüft/überprüfen, ob die gewählte Rufnummer der hinterlegten Applikation zugeordnet ist. Hierdurch wird sichergestellt, dass die richtige Mitteilung erzeugt wird, um die in dem Benutzeridentifikationsmodul hinterlegte Applikation auszulösen, d.h. zu triggern. Dabei kann die Überprüfung sowohl in dem mobilen Endgerät selbst, als auch auf der Seite der zentralen Verwaltungseinheit durchgeführt werden. Die Feststellung kann durch das mobile Endgerät direkt nach dem Wählen der bestimmten Rufnummer oder nach dem Aufbau der Rufes zu der zentralen Verwaltungseinheit erfolgen. Es ist aber auch möglich, dass die Überprüfung durch das mobile Endgerät erst dann durchgeführt wird, wenn das mobile Endgerät entweder selbst festgestellt hat, dass der entgegengenomme Ruf beendet worden ist, oder die Mitteilung empfangen hat, dass festgestellt worden ist, dass der entgegengenommene Ruf beendet wurde.

Alternativ dazu kann die Überprüfung auch auf der Seite der zentrale Verwaltungseinheit erfolgen. Stellt die zentrale Verwaltungseinheit fest, dass die gewählte Rufnummer einer bestimmten in dem Benutzeridentifikationsmodul des anrufenden mobilen Endgerätes hinterlegten Applikation zugeordnet ist, so kann die zentrale Verwaltungseinheit nach der Feststellung, dass der entgegengenommene Ruf beendet worden ist, eine Mitteilung über die Beendigung der Rufes erzeugen. Diese Mitteilung kann dann an das mobile Endgerät gesendet werden, um dort die Applikation auszulösen.

Bevorzugt kann bei dem Verfahren die Feststellung, dass der entgegengenommene Ruf beendet worden ist, durch die zentrale Verwaltungseinheit und/oder durch das mobile Endgerät erfolgen. Das mobile Endgerät oder die zentrale Verwaltungseinheit können Mittel zum Überprüfen des Zustandes des Rufes aufweisen. Stellt das mobile Endgerät fest, dass der von der zentralen Verwaltungseinheit entgegengenommene Ruf beendet worden ist, so erzeugt das mobile Endgerät vorzugsweise selbst die Mitteilung bzw. den sogenannten "Call-Disconnect-Event" und überträgt diese(n) an die hinterlegte Applikation auf dem Benutzeridentifikationsmodul. Stellt alternativ dazu die zentrale Verwaltungseinheit fest, dass der von ihr entgegengenommene Ruf beendet worden ist, so kann die zentrale Verwaltungseinheit eine Mitteilung erzeugen und an das mobile Endgerät übersenden, in der sie angibt, das der entgegengenommene Ruf beendet worden ist. Vorteilhafterweise wird die Mitteilung über die Feststellung der Beendigung des entgegengenommen Rufes in diesem Fall in der zentrale Verwaltungseinheit erzeugt. Das mobile Endgerät erhält dann die erzeugte Mitteilung, so dass es diese nicht mehr selber zu erzeugen hat. Nach dem Eingang der gesendeten Mitteilung triggert diese die hinterlegte Applikation.

Auch das Beenden des von der zentralen Verwaltungseinheit entgegengenommen Rufes kann entweder durch das mobile Endgerät oder durch die zentrale Verwaltungseinheit erfolgen. So kann der zustande gekommene Ruf zu der zentralen Verwaltungseinheit durch das mobile Endgerät beendet werden. Dies kann nach einem bestimmten Feedback durch die zentrale Verwaltungseinheit erfolgen oder aber direkt nach dem Erkennen, dass die Verbindung zustande gekommen ist. Wird an dem mobilen Endgerät festgestellt, dass sich die zentrale Verwaltungseinheit meldet, so kann der Nutzer beispielsweise durch das Bedienen der Beendigungstaste auf dem mobilen Endgerät die Verbindung beenden. Es kann auch ein Automatismus in dem mobilen Endgerät vorgesehen sein, der den von der zentralen Verwaltungseinheit entgegengenommen Ruf vorzugsweise unmittelbar nach dem Zustandekommen des Rufes beendet. Das bestimmte Feedback der zentralen Verwaltungseinheit kann beispielsweise eine Nachricht über das Anwählen der hinterlegten Applikation sein. Alternativ dazu kann die Beendigung des entgegengenommen Rufes in der zentralen Verwaltungseinheit erfolgen. Dieses kann entweder direkt nach dem Zustandekommen des Rufes erfolgen oder nach einer bestimmten Ansage an den Nutzer des mobilen Endgerätes. Beispielsweise kann die zentrale Verwaltungseinheit dem mobilen Endgerät eine Nachricht über die hinterlegte Applikation zukommen lassen. Anschließend wird die Verbindung durch die zentrale Verwaltungseinheit beendet.

Gemäß einer besonders zweckmäßigen Weiterbildung der Erfindung kann bei dem Verfahren vorgesehen sein, dass das Benutzeridentifikationsmodul Teil einer SIM-Karte ist. Vorteilhafterweise umfasst das Benutzeridentifikationsmodul bzw. die SIM-Karte ein SIM-Toolkit, durch das Applikationen auf dem Benutzeridentifikationsmodul bzw. der SIM-Karte gespeichert werden können. Bei den Applikationen kann es sich beispielsweise im Anwendungen oder Servicedienste handeln. Sind das Benutzeridentifikationsmodul bzw. die SIM-Karte und das mobile Endgerät mit dem SIM-Toolkit-Standard kompatibel, kann auf dem Benutzeridentifikationsmodul bzw. der SIM-Karte ein Betriebssystem gespeichert werden, das eine aktive Kommunikation zwischen der Elektronik des mobilen Endgerätes und dem Netzwerkanbieter bzw. -betreiber ermöglicht. Der Netzwerkanbieter kann auf diese Weise Software auf dem mobilen Endgerät aktualisieren, um beispielsweise die neuesten standortbezogene Dienste, sogenannte Location Based Services, zur Verfügung zu stellen. Auf diese Weise können die mobilen Endgeräte auf dem neuesten Stand der Technik bleiben.

Bei der zentralen Verwaltungseinheit in dem Telekommunikationsnetzwerk kann es sich beispielsweise um einen Anrufbeantworter, einen sogenannten "intelligent voice recorder" (IVR), oder ein Call-Center bzw. eine Person in einem Call-Center handeln. So kann beispielsweise durch die bestimmte gewählte Rufnummer ein Anrufbeantworter den Ruf entgegennehmen. Dabei kann der Anrufbeantworter eine gespeichert Nachricht wiedergeben, in der er beispielsweise dem Nutzer des mobilen Endgerätes mitteilt, dass nach dem Beendigen des Rufes eine spezielle Applikation auf dem Endgerät ausgeführt bzw. angezeigt wird. Vorzugsweise kann dem Nutzer des mobilen Endgerätes eine Sprachnachricht angesagt werden, in der diesem mitgeteilt wird, dass ihm nach der Beendigung des Rufes auf seinem mobilen Endgerät ein SIM-Toolkit-Menü zur weiteren Bearbeitung angezeigt wird.

Alternativ kann der Ruf von einem Call-Center bzw. einer Person in einem Call-Center entgegengenommen werden. Dabei kann dem Nutzer des mobilen Endgerätes mitgeteilt werden, dass nach der Beendigung des Rufes eine in dem Benutzeridentifikationsmodul des mobilen Endgerätes hinterlegte Applikation aufgerufen bzw. ausgeführt wird. Die zentrale Verwaltungseinheit kann aber auch lediglich eine Rechnereinheit in dem Telekommunikationsnetzwerk sein, die einen Ruf entgegennehmen und anschließend beenden kann. Durch den Anrufbeantworter oder das Call-Center kann dem Nutzer des mobilen Endgerätes z.B. mitgeteilt werden, was sich hinter der bestimmten Rufnummer, insbesondere einer gewählten Kurzwahlrufnummer, verbirgt. So kann dem Anrufer beispielsweise angesagt werden, dass nach der Beendigung des Rufes dem Anrufer ein bestimmtes Menü auf dem mobilen Endgerät angezeigt wird. Der Anrufbeantworter oder auch die Person im Call-Center können dem Nutzer des mobilen Endgerätes alternativ mitteilen, dass er die Verbindung beenden soll.

Die in dem Benutzeridentifikationsmodul bzw. der SIM-Karte hinterlegte Applikation kann vorzugsweise ein Menü, insbesondere ein SIM-Toolkit-Menü, umfassen. Das mobile Endgerät ist bei diesem Verfahren einfach in der Lage dem Nutzer des mobilen Endgerätes bestimmte Dienste bzw. Applikationen anzubieten. Es ist aufgrund der in dem Benutzeridentifikationsmodul hinterlegten Applikation bzw. aufgrund der speziellen SIM-Karte mit dem Benutzeridentifikationsmodul nicht mehr erforderlich, dass der Netzanbieter, insbesondere eine zentrale Verwaltungseinheit des Telekommunikationsnetzwerkes des Netzanbieters, Applikationsdaten dem Nutzer des mobilen Endgerätes nach dem Aufbau eines Rufes zur Verfügung stellt. Es ist durch die in dem mobilen Endgerät gespeicherten Applikationen deutlich weniger Datenverkehr zu dem Netzanbieter erforderlich, um beispielsweise eine Applikation auszuführen oder ein spezielles SIM-Toolkit-Menü aufzurufen.

Nach dem Auslösen der in dem Benutzeridentifikationsmodul hinterlegten Applikation können auf einer Ausgabeeinheit des mobilen Endgerätes Informationen akustisch und/oder graphisch dargestellt werden. D.h., es kann dem Nutzer beispielsweise ein SIM-Toolkit-Menü auf einem Display des mobilen Endgerätes angezeigt werden. Es ist alternativ oder zusätzlich denkbar, dass dem Nutzer des mobilen Endgerätes angesagt wird, was er zu tun hat, um bestimmte Dinge zu erhalten.

Die Erfindung und ihre Weiterbildungen sowie deren Vorteile werden nachfolgend anhand einer Zeichnung näher erläutert. Es zeigt schematisch:

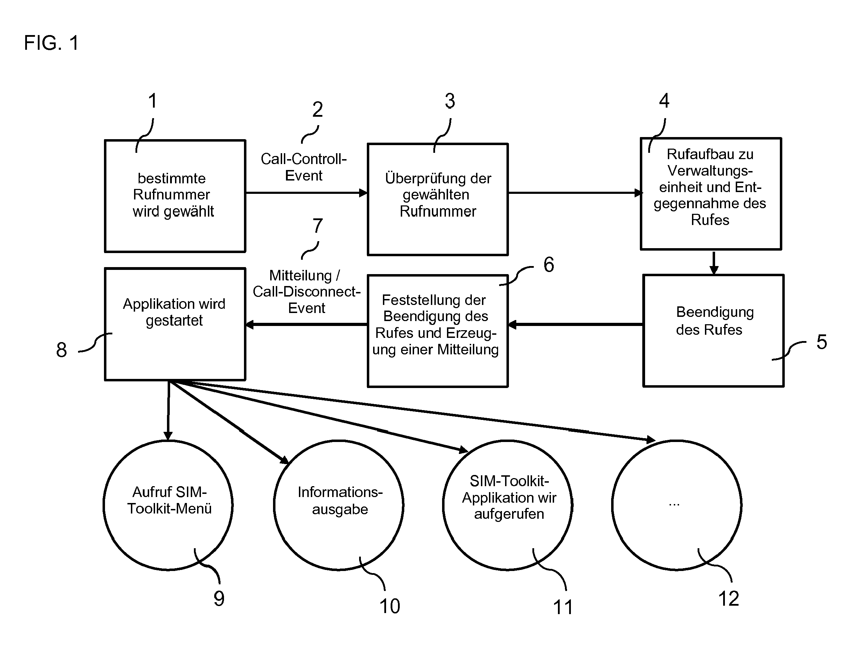

- Figur 1: einen möglichen Verfahrensablauf des Verfahrens zum Ausführen einer in einem Benutzeridentifikationsmodul eines mobilen Endgerätes hinterlegten Applikation.

In den Fig. 1 zeigt schematisch einen möglichen Verfahrensablauf des Verfahrens zum Ausführen einer in einem Benutzeridentifikationsmodul eines mobilen Endgerätes hinterlegten Applikation, insbesondere einer SIM-Toolkit-Applikation. In einem ersten Verfahrensschritt 1 wird mittels einer Eingabeeinheit eines mobilen Endgerätes eine bestimmt Rufnummer gewählt. Die Rufnummer ist einer in dem Benutzeridentifikationsmodul hinterlegten Applikation zugeordnet. Vorzugsweise ist die Rufnummer eine Kurzwahlrufnummer, wie beispielsweise "1111" oder "611". Anschließend wird in einem zweiten Schritt 3 die gewählte Rufnummer überprüft. Hierzu prüft vorteilhafterweise eine Applikation, insbesondere eine SIM-Toolkit-Applikation, ob der gewählten Rufnummer eine Applikation zugeordnet ist. Die Überprüfung erfolgt beispielsweise durch das SIM-Toolkit-Kommando "Call Control Event". Eine SIM-Toolkit-Applikation ist eine in einem Benutzeridentifikationsmodul bzw. in einer SIM-Karte gespeicherte Applikation. Ergibt die Überprüfung, dass der gewählten Rufnummer ein in dem Benutzeridentifikationsmodul hinterlegte Applikation zugeordnet ist, so wird ein Ruf von dem mobilen Endgerät, welches beispielsweise eine Mobiltelefon oder ein PDA ist, zu einer zentralen Verwaltungseinheit in einem Telekommunikationsnetzwerk aufgebaut, siehe Schritt 4. Die zentrale Verwaltungseinheit ist vorzugsweise ein Anrufbeantworter des Netzanbieters oder ein Call-Center bzw. eine Person in einem Call-Center des Netzanbieters. Nach dem Rufaufbau nimmt die zentrale Verwaltungseinheit den Anruf entgegen. D.h., der Anruf wird nicht geblockt, sondern kommt zustande. Ein Anrufbeantworter kann beispielsweise eine Textnachricht ansagen. Diese kann z.B. folgendermaßen lauten: "Nach dem Beenden des Rufes wird Ihnen auf ihrem mobilen Endgerät eine SIM-Toolkit-Menü angezeigt". Das Beenden des von der zentralen Verwaltungseinheit entgegengenommenen Rufes kann durch die zentrale Verwaltungseinheit, aber auch durch das mobile Endgerät erfolgen, siehe Verfahrensschritt 5 in Fig. 1. Durch das Zustandekommen des Rufes von dem mobilen Endgerät zu der zentralen Verwaltungseinheit wird verhindert, dass verwirrende Informationsmeldungen auf dem mobilen Endgerät angezeigt werden, wie es der Fall wäre, wenn der Ruf vor dem Zustandekommen, insbesondere durch das mobile Endgerät selbst, geblockt würde. In einem weiteren Verfahrensschritt 6 erfolgen die Feststellung der Beendigung des Rufes und das Erzeugen einer bestimmten Mitteilung, insbesondere eines sogenannten "Call-Disconnect-Events". Die Feststellung bzw. Überprüfung, ob der Ruf beendet worden ist, kann ebenfalls sowohl in dem mobilen Endgerät, als auch in der zentralen Verwaltungseinheit erfolgen. Hierzu können entsprechende Mittel in dem mobilen Endgerät oder in der zentralen Verwaltungseinheit vorgesehen sein. Stellt das mobile Endgerät fest, dass der Ruf beendet worden ist, so erzeugt das mobile Endgerät vorteilhafterweise die Mitteilung über die Feststellung der Beendigung des Rufes, d.h. den sogenannten "Call-Disconnect-Event. Alternativ kann die Mitteilung über die Feststellung der Beendigung des Rufes durch die zentrale Verwaltungseinheit erzeugt werden, wenn beispielsweise diese die Überprüfung über die Beendigung des Rufes durchführt. In diesem Fall sendet die zentrale Verwaltungseinheit die erzeugt Mitteilung über die Feststellung der Beendigung des Rufes an das mobile Endgerät", siehe Schritt 7 in Fig. 1. Die in dem mobilen Endgerät erzeugte oder von dem mobilen Endgerät empfangene Mitteilung über die Beendigung des Rufes, d.h. der "Call-Disconnect-Event", löst die in dem Benutzeridentifikationsmodul hinterlegte Applikation aus. D.h., nach der Feststellung der Beendigung des Rufes sendet das mobile Endgerät die Mitteilung an das Benutzeridentifikationsmodul bzw. an die SIM-Karte mit dem Benutzeridentifikationsmodul. Die Mitteilung bzw. der "Call-Disconnect-Event" triggert die hinterlegte Applikation, insbesondere SIM-Applikation, welche wiederum weitere Aktionen durchführen kann", siehe Schritt 8 in Fig. 1. Beispielsweise kann ein Aufruf des SIM-Toolkit-Menüs durch das triggern der hinterlegten Applikation erfolgen, siehe Schritt 9. Alternativ kann nach dem Starten der Applikation eine Informationsausgabe erfolgen, siehe Schritt 10 in Fig. 1. Ferner können eine SIM-Toolkit-Applikation aufgerufen werden, siehe Schritt 11, oder weitere nicht dargestellte Dienste zur Verfügung gestellt werden, siehe Schritt 12.

Beispielsweise ist es innerhalb des DuoBill-Projektes von Vodafone gefordert, mittels einer Kurzwahlrufnummer, z.B. "1111", ein SIM-Toolkit Menü aufzurufen. Um dies zu realisieren prüft eine in dem Benutzeridentifikationsmodul bzw. in der SIM-Karte hinterlegte SIM Applikation, über das SIM-Toolkit-Kommando "CALL CONTROL EVENT", ob die vom Kunden eingegebene Kurzwahlrufnummer einer Applikation zugeordnet ist und erlaubt nach erfolgreicher Prüfung den Rufaufbau zu einer zentralen Verwaltungseinheit.

Hinter der Kurzwahlrufnummer kann eine Verbindung zu diversen Gegensprechern bzw. Systemen hinterlegt sein, wie z.B. ein "intelligent voice recorder (IVR)" oder eine Call-Center-Person, die dem Kunden z.B. mitteilt, den entgegengenommenen Ruf zu beenden.

Nach der Beendigung des Rufes sendet das mobile Endgerät einen sogenannten "CALL DISCONNECT EVENT" an das Benutzeridentifikationsmodul bzw. an die SIM-Karte bzw. die dort hinterlegte Applikation. Dieser Event triggert die Applikation bzw. die SIM-Applikation, welche nun weitere Aktionen durchführen kann, wie zum Beispiel das SIM-Toolkit Menü aufzurufen. Auch können durch diesen Mechanismus weitere Applikationen und somit Services für den Kunden auf dem Benutzeridentifikationsmodul bzw. der SIM-Karte aufgerufen werden.

Ein Vorteil dieses Verfahrens ist, dass sehr viel mehr mobile Endgeräte unterstützt werden, im Vergleich zu einem Verfahren, bei dem der Rufaufbau geblockt wird. Durch die zentrale Verwaltungseinheit, insbesondere den Anrufbeantworter oder der Call-Center-Person kann dem Kunden nochmals genau mitgeteilt werden, was sich hinter der gewählten bestimmten Kurzwahlrufnummer verbirgt. Z.B. kann mitgeteilt werden, dass nach Beendigung des Anrufes dem Nutzer das DuoBill-Menü von Vodafone auf seinem mobilen Endgerät angezeigt wird.

Durch diese Verfahren ist es leicht eine SIM-Applikation, beispielweise ein SIM-Toolkit-Menü, im mobilen Endgerät für den Kunden zu finden und dem Kunden Dienste über die SIM-Karte mittels SIM-Toolkit Applikationen anzubieten.

## Patentansprüche

1. Verfahren zum Ausführen einer in einem Benutzeridentifikationsmodul eines mobilen Endgerätes hinterlegten Applikation, mit folgenden Verfahrensschritten:
a) Wählen einer bestimmten, der hinterlegten Applikation zugeordneten Rufnummer mittels einer Eingabeeinheit des mobilen Endgerätes,
b) Aufbau eines Rufes zu einer zentralen Verwaltungseinheit in einem Telekommunikationsnetzwerk durch das mobile Endgerät,
c) Feststellung, dass ein aufgebauter Ruf durch die zentrale Verwaltungseinheit entgegengenommen und der entgegengenommene Ruf beendet worden ist,
d) Erzeugen einer Mitteilung durch das mobile Endgerät nach Feststellung der Beendigung des entgegengenommen Rufes oder Empfangen einer Mitteilung an dem mobilen Endgerät über die Feststellung der Beendigung des entgegengenommen Rufes,
e) Auslösen der in dem Benutzeridentifikationsmodul hinterlegten Applikation aufgrund der erzeugten oder empfangenen Mitteilung.

2. Verfahren nach Anspruch 1, **dadurch gekennzeichnet, dass** das mobile Endgerät oder die zentrale Verwaltungseinheit überprüft, ob die gewählte Rufnummer der hinterlegten Applikation zugeordnet ist.

3. Verfahren nach einem der vorhergehenden Ansprüche 1 oder 2, **dadurch gekennzeichnet, dass** das mobile Endgerät nach dem Wählen der bestimmten Rufnummer oder nach dem Aufbau des Rufes zu der zentralen Verwaltungseinheit oder nach der Feststellung, dass der entgegengenommene Ruf beendet worden ist, überprüft, ob die die gewählte Rufnummer der hinterlegten Applikation zugeordnet ist.

4. Verfahren nach einem der vorhergehenden Ansprüche 1 bis 3, **dadurch gekennzeichnet, dass** die Feststellung, dass der entgegengenommene Ruf beendet worden ist, durch die zentrale Verwaltungseinheit und/oder das mobile Endgerät erfolgt.

5. Verfahren nach einem der vorhergehenden Ansprüche 1 bis 4, **dadurch gekennzeichnet, dass** die Mitteilung über die Feststellung der Beendigung des entgegengenommen Rufes in der zentrale Verwaltungseinheit erzeugt wird.

6. Verfahren nach einem der vorhergehenden Ansprüche 1 bis 5, **dadurch gekennzeichnet, dass** der entgegengenommene Ruf durch die zentrale Verwaltungseinheit oder das mobile Endgerät beendet wird.

7. Verfahren nach einem der vorhergehenden Ansprüche 1 bis 6, **dadurch gekennzeichnet, dass** das Benutzeridentifikationsmodul Teil einer SIM-Karte ist.

8. Verfahren nach einem der vorhergehenden Ansprüche 1 bis 7, **dadurch gekennzeichnet, dass** das Benutzeridentifikationsmodul ein SIM-Toolkit umfasst, durch das Applikationen auf dem Benutzeridentifikationsmodul bzw. auf der SIM-Karte gespeichert werden können.

9. Verfahren nach einem der vorhergehenden Ansprüche 1 bis 8, **dadurch gekennzeichnet, dass** die zentrale Verwaltungseinheit ein Anrufbeantworter oder eine Person in einem Call-Center ist.

10. Verfahren nach einem der vorhergehenden Ansprüche 1 bis 9, **dadurch gekennzeichnet, dass** die Mitteilung ein Call-Disconnect-Event ist.

11. Verfahren nach einem der vorhergehenden Ansprüche 1 bis 10, **dadurch gekennzeichnet, dass** die Mitteilung, insbesondere der Call-Disconnect-Event, an die in dem Benutzeridentifikationsmodul hinterlegte Applikation gesendet wird.

12. Verfahren nach einem der vorhergehenden Ansprüche 1 bis 11, **dadurch gekennzeichnet, dass** die Applikation ein Menü umfasst.

13. Verfahren nach einem der vorhergehenden Ansprüche 1 bis 12, **dadurch gekennzeichnet, dass** nach dem Auslösen der in dem Benutzeridentifikationsmodul hinterlegten Applikation auf einer Ausgabeeinheit des mobilen Endgerätes Informationen akustisch und/oder graphisch dargestellt werden.
